# EUROPÄISCHE PATENTSCHRIFT

(11) **EP 1 101 908 B1**
(45) Veröffentlichungstag und Bekanntmachung des Hinweises auf die Patenterteilung: **07.12.2005**
(21) Anmeldenummer: 00124263.5
(22) Anmeldetag: 13.11.2000
(51) Int. Cl.: F01N 3/08, F01N 3/023, F01N 3/20, F02M 25/07, B01D 53/94

(54) **Vorrichtung und Verfahren zum Reduzieren von schädlichen Bestandteilen im Abgas einer Brennkraftmaschine, insbesondere einer Diesel-Brennkraftmaschine**
Device and method for reducing harmful components in the exhaust gas of an internal combustion engine, especially a Diesel-internal-combustion engine
Dispositif et méthode servant à limiter la quantité de composants nocifs presents dans les gaz d'échappement d'un moteur à combustion interne, en particulier d'un moteur à combustion interne Diesel

(30) Priorität: 17.11.1999 DE 19955324
(43) Veröffentlichungstag der Anmeldung: 23.05.2001
(60) Teilanmeldung: 05008581.0
(73) Patentinhaber: Volkswagen Aktiengesellschaft, 38436 Wolfsburg (DE)
(72) Erfinder: Engeler, Werner, 38527 Meine (DE); Düsterdiek, Thorsten, Dr., 30163 Hannover (DE); Kahmann, Gerhard, 38302 Wolfenbüttel (DE)
(74) Vertreter: Meyer, Enno

(56) Entgegenhaltungen:
- EP-A- 0 758 713
- EP-B- 0 931 922
- WO-A-99/44725
- US-A- 5 412 946
- PATENT ABSTRACTS OF JAPAN vol. 1997, no. 07, 31. Juli 1997 (1997-07-31) & JP 09 088727 A (HINO MOTORS LTD), 31. März 1997 (1997-03-31)
- PATENT ABSTRACTS OF JAPAN vol. 018, no. 314 (M-1621), 15. Juni 1994 (1994-06-15) & JP 06 066208 A (YANMAR DIESEL ENGINE CO LTD), 8. März 1994 (1994-03-08)

## Beschreibung

Die Erfindung betrifft eine Vorrichtung zum Reduzieren von schädlichen Bestandteilen im Abgas einer Brennkraftmaschine, insbesondere einer Diesel-Brennkraftmaschine.

Im Zuge der Entwicklung von Vorrichtungen zum Reduzieren von schädlichen Bestandteilen im Abgas einer Brennkraftmaschine, insbesondere einer Diesel-Brennkraftmaschine, sind bereits eine Vielzahl von Maßnahmen vorgeschlagen und bekannt geworden.

Zur Beseitigung von Partikeln aus dem Abgas einer Diesel-Brennkraftmaschine ist ein Partikelfilter geeignet, der in die Abgasleitung eingebaut wird. Jedoch neigt ein Partikelfilter dazu, sich mit der Zeit zuzusetzen, und er muß daher von Zeit zu Zeit regeneriert werden, was beispielsweise durch ein Frei- bzw. Abbrennen der Partikel am Filter erfolgt. Dazu ist eine Abbrenntemperatur ab etwa 550°C notwendig. Diese Temperaturen werden unter normalen Betriebsbedingungen nicht erreicht.

Um das Abbrennen der Partikel bei niedrigeren Temperaturen zu ermöglichen, ist bereits vorgeschlagen worden, Additive im Abgas zu verwenden, mit denen die Zündtemperatur der Partikel gesenkt werden kann. Allerdings ist eine Senkung der Zündtemperatur der Partikel in den üblichen Temperaturbereich des Partikelfilters im normalen Funktionsbetrieb der Brennkraftmaschine nicht möglich. Ein weiterer Nachteil des plötzlichen Abbrennens der- am Partikelfilter gesammelten Partikel führt auch zu einer starken Beanspruchung des Filtermaterials.

Es ist daher ein kontinuierliches Regenerieren des Partikelfilters durch Abbrennen wünschenswert. Hierzu ist bereits vorgeschlagen worden, dem Partikelfilter in der Abgasleitung einen Oxidationskatalysator vorzuschalten, siehe z. B. EP 0 341 832 B1, der aus dem im Abgas enthaltenen NO → NO₂ produziert, so daß mittels des im NO₂ vorhandenen Sauerstoffs die Partikel im wesentlichen kontinuierlich oxidiert werden. Ein solches System ist unter der Bezeichnung CRT-System (Continuously Regenerating Trap) bekannt. Ein Nachteil dieses Systems ist, das für die Regeneration des Partikelfilters verhältnismäßig große Mengen Stickoxide benötigt werden, die selbst ein Schadstoff sind und gesetzlichen Umitationen unterliegen.

Aus der EP-A-0 758 713 ist eine Abgasreinigungsvorrichtung für eine Dieselbrennkraftmaschine bekannt, bei der in Abgasströmungsrichtung ein Oxidationskatalysator, ein Partikelfilter und ein NOₓ-Speicher nacheinander angeordnet sind.

Ferner zeigt die Druckschrift DE-A-40 07 516 einen Dieselmotor für stationäre Anlagen, dessen Abgasreinigungssystem hinter einer Abgasturbine einen Oxidationskatalysator sowie einen nachfolgenden Partikelfilter aufweist, wobei zur Absenkung der NOₓ-Emission eine geregelte Rückführung von gereinigten und gekühlten Abgasen im gesamten Betriebsbereich des Dieselmotors durchgeführt wird.

Die Druckschrift EP O 758 713 A1 beschreibt ein Verfahren zum Reinigen des Abgases eines Dieselmotor, bei der in Abgasströrnungsrichtung nach dem Dieselmotor ein Oxidationskatalysator, ein Partikelfilter und ein NOx-Speicherkatalysator angeordnet sind.

Nachteilig bei den bekannten Vorrichtungen ist, daß die Abgasreinigung suboptimal erfolgt und/oder die Abgasreinigungsanlage aus zu vielen einzelnen Bestandteilen besteht.

Der Erfindung liegt die Aufgabe zugrunde, eine Vorrichtung der eingangs angegebenen Art so zu verbessern, so daß bei Gewährleistung einer kontinuierlichen Regeneration des Partikelfilters der Anteil der Stickoxide im Abgas niedrig gehalten werden kann.

Diese Aufgabe wird durch die Merkmale der Ansprüche 1, 2, 3, 11 und 14 gelöst. Bevorzugte Ausführungsformen der Erfindung sind Gegenstand der Unteransprüche.

Bei einer erfindungsgemäßen Ausführungsform ist in der Abgasleitung in der Strömungsrichtung ein Oxidationskatalysator, ein Partikelfilter und nachfolgend ein NOₓ-Speicherkatalysator angeordnet, wobei vorzugsweise vor dem Oxidationskatalysator eine Lambda-Sonde bzw. hinter dem Oxidationskatalysator ein NOₓ-Sensor angeordnet ist.

Um Bauraum zu sparen bzw. effektiver auszunutzen, ist es vorteilhaft, den Oxidationskatalysator und/oder NOₓ-Speicherkatalysator mit dem Partikelfilter zu kombinieren und insbesondere in den Partikelfilter zu integrieren. Dabei ist es vorteilhaft, den Oxidationskatalysator durch eine Oxidationskatalysator-Beschichtung auf der Einlaßseite des Partikelfilters zu bilden. Der. NOₓ-Speicherkatalysator kann in Form einer NOₓ-Speicherkatalysator-Beschichtung einlaßseitig, auslaßseitig oder beidseitig des Partikelfilters gebildet sein. Hierbei bilden der Partikelfilter und/oder der Oxidationskatalysator einerseits und der Partikelfilter und der NOₓ-Speicherkatalysator andererseits mehrere kombinierte oder einen integrierten Körper, der sich quer zur Strömungsrichtung des Abgases erstreckt, perforiert ist und vom Abgas durchströmt wird.

Bevorzugte Ausführungsformen der Erfindung werden nachfolgend anhand der Zeichnungen näher erläutert. Es zeigen
- Fig. 1: eine Brennkraftmaschine mit einer erfindungsgemäßen Vorrichtung zum Reduzieren von schädlichen Bestandteilen im Abgas der Brennkraftmaschine in schematischer Darstellung;
- Fig. 2: eine Brennkraftmaschine mit einer erfindungsgemäßen Vorrichtung zum Reduzieren von schädlichen Bestandteilen im Abgas der Brennkraftmaschine in abgewandelter Ausgestaltung in schematischer Darstellung;
- Fig. 3: eine Brennkraftmaschine mit einer erfindungsgemäßen Vorrichtung zum Reduzieren von schädlichen Bestandteilen im Abgas der Brennkraftmaschine in weiter abgewandelter Ausgestaltung in schematischer Darstellung; und
- Fig. 4: eine Brennkraftmaschine mit einer Vorrichtung zum Reduzieren von schädlichen Bestandteilen im Abgas der Brennkraftmaschine in schematischer Darstellung;

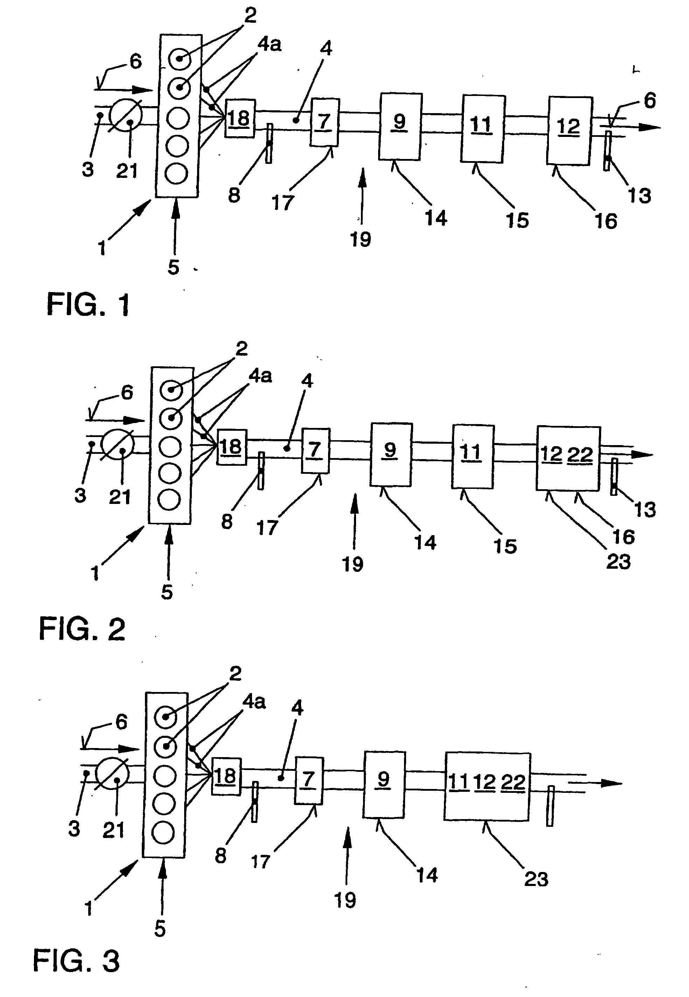

In Fig. 1 ist eine Brennkraftmaschine, insbesondere eine Diesel-Brennkraftmaschine, mit 1 bezeichnet, und sie weist mehrere Zylinder 2 auf, zu denen sich eine Luftansaugleitung 3 und von denen sich eine Abgasleitung 4 in an sich bekannter Weise erstrecken. Der Brennkraftmaschine 1 sind im einzelnen nicht dargestellte Kraftstoff-Einspritzventile einer Kraftstoff-Einspritzvorrichtung 5 zugeordnet. Die Zylinder 2 werden durch direkte Einspritzung mit Kraftstoff von den einstellbaren Einspritzventilen und mit Verbrennungsluft durch die in ihrer wirksamen Querschnittsgröße einstellbaren Luftansaugleitung 3 in einem jeweils bestimmten Kraftstoff/Luft-Verhältnis versorgt, wodurch der Verbrennungsbetrieb gewährleistet ist. Die Zylinder 2 der Brennkraftmaschine 1 sind durch Zweigleitungsabschnitte 4a mit der gemeinsamen Abgasleitung 4 verbunden, die von dem von der Brennkraftmaschine 1 ausgestoßenen Abgas in der mit dem Pfeil 6 bezeichneten Strömungsrichtung durchströmt wird.

In der Abgasleitung 4 sind in der Strömungsrichtung 6 hintereinanderliegend eine Schwefelfalle 7, eine den Sauerstoffgehalt ermittelnde Lamda-Sonde 8, ein Oxidationskatalysator 9, ein Partikelfilter 11, ein NOₓ-Speicherkatalysator 12 und ein NOₓ-Sensor 13 angeordnet. Der Oxidationskatalysator 9, der Partikelfilter 11 und der NOₓ-Speicherkatalysator 12 sind jeweils in einem Gehäuse 14, 15, 16 angeordnet, das in seiner Querschnittsabmessung größer bemessen ist, als die Querschnittsabmessung der Abgasleitung 4. Dies gilt vorzugsweise auch für die Schwefelfalle 7, die in einem entsprechenden Gehäuse 17 angeordnet sein kann. Außerdem kann an die Abgasleitung 4 in der Strömungsrichtung 6 vor der Schwefelfalle 7 ein Abgasturbolader 18 angeschlossen sein, wie es vereinfacht dargestellt ist.

Die Lamdasonde 8 und/oder der NOₓ-Sensor 13 ist bzw. sind Teile einer nicht dargestellten Steuer- oder Regeleinrichtung zum Einstellen eines gewünschten Kraftstoff/Luft-Verhältnises λ des zur Brennkraftmaschine gelangenden Kraftstoffgemisches.

Die einzelnen Aggregate bzw. Geräte der Brennkraftmaschine 1 und der insgesamt mit 19 bezeichneten Abgasanlage, die gesteuert werden bzw. eine Meßfunktion ausführen, sind jeweils durch eine Steuerleitung bzw. Signalleitung mit einer elektronischen Steuereinrichtung verbunden, die die Abgasanlage und die Brennkraftmaschine 1 unter Berücksichtigung der gemessenen und gespeicherter Parameter steuert bzw. regelt. Dies ist dem zuständigen Fachmann an sich bekannt und aus Vereinfachungsgründen nicht dargestellt.

Im Funktionsbetrieb reduziert die Schwefelfalle 7 den Schwefelgehalt im Abgas, um die Funktion des NOₓ-Speicherkatalysators 12 und gegebenenfalls auch des Partikelfilters 11 sicherzustellen. Eine Regeneration der Schwefelfalle 7 erfolgt durch Motormaßnahmen, d.h. λ<1 Betrieb durch Saugluftandrosselung, Nacheinspritzung oder beispielsweise Änderung der EGR-Rate. In Fällen, in denen ein schwefelfreier oder -armer Kraftstoff zur Verfügung steht, kann die Schwefelfalle 7 weggelassen werden.

Der Oxidationskatalysator 9 reduziert Kohlenmonoxid und Kohlenwasserstoffe. Eine weitere Funktion des Oxidationskatalysators 9 ist die Oxidation von NO zu NO₂, das zu einer Ruß- bzw. Partikelverbrennung im Partikelfilter 11 führt (Continously Regenerating Trap) und im NOₓ-Speicherkatalysator 12 besser gespeichert werden kann als NO. Eine Regeneration des NOₓ-Speicherkatalysators 12 erfolgt durch eine Verringerung des Kraftstoff/Luft-Verhältnises, insbesondere eine Androsselung der Brennkraftmaschine 1 (λ < 1) im Sinne einer Verringerung der Ansaugluftmenge an der Drosselklappe 21 in der Luftansaugleitung 3 und/oder Nacheinspritzung.

Die Funktion der Schwefelfalle 7, des NOx-Speicherkatalysators 12 und der Steuereinrichtung sind so ausgebildet, das die Regeneration der Schwefelfalle 7 unter gleichen Bedingungen (Temperatur, Abgaszusammensetzung) wie die Regeneration des NOₓ-Speicherkatalysators 12 erfolgen kann.

Die Regenerationsvorgänge werden über in der Steuereinrichtung gespeicherte Algorithmen unter Berücksichtigung der Meßsignale der Lambdasonde 8 und des NOₓ-Sensors 13 gesteuert und geregelt.

Die Funktionsüberwachung (OBD) erfolgt mit dem NOₓ-Sensor 13.

Beim Ausführungsbeispiel nach Fig. 2, bei dem gleiche oder vergleichbare Teile mit gleichen Bezugszeichen versehen sind, sind der NOₓ-Speicherkatalysator 12 und ein Reduktionskatalysator 22, der vorzugsweise durch einen 3-Wege-Katalysator gebildet ist, in der Strömungsrichtung 6 hintereinanderliegend angeordnet und insbesondere zu einer Baueinheit vereinigt, hier in einem Gehäuse 23 angeordnet, so daß das Abgas im Funktionsbetrieb zunächst zum NOₓ-Speicherkatalysator 12 und dann zum Reduktionskatalysator 22 strömt. Es wird eine Bauteileinsparung und eine vorteilhaft kleine Bauweise erreicht, wenn die vorgenannten Katalysatoren 12, 22 durch eine multifunktionelle Beschichtung an einer Matrix gebildet sind. Es kann im eingangsseitigen Bereich eine dem NOₓ-Speicherkatalysator 12 entsprechende Beschichtung vorgesehen sein und im ausgangsseitigen Bereich eine dem Reduktionskatalysator 22 entsprechende Beschichtung vorgesehen sein.

Das Ausführungsbeispiel nach Fig. 3, bei dem ebenfalls gleiche oder vergleichbare Teile mit gleichen Bezugszeichen versehen sind, unterscheidet sich vom Ausführungsbeispiel nach Fig. 2 dadurch, daß zusätzlich der Partikelfilter 11 mit dem NOₓ-Speicherkatalysator 12 und dem Reduktionskatalysator 22 in vorbeschriebener Weise eine Baueinheit in einem Gehäuse 23 bilden. Hierbei können jeweils eine dem NOₓ-Katalysator 12 entsprechende Beschichtung und eine dem Reduktionskatalysator 22 entsprechende Beschichtung hintereinanderliegend oder als zweifache Beschichtung oder als multifunktionale Beschichtung vorgesehen sein.

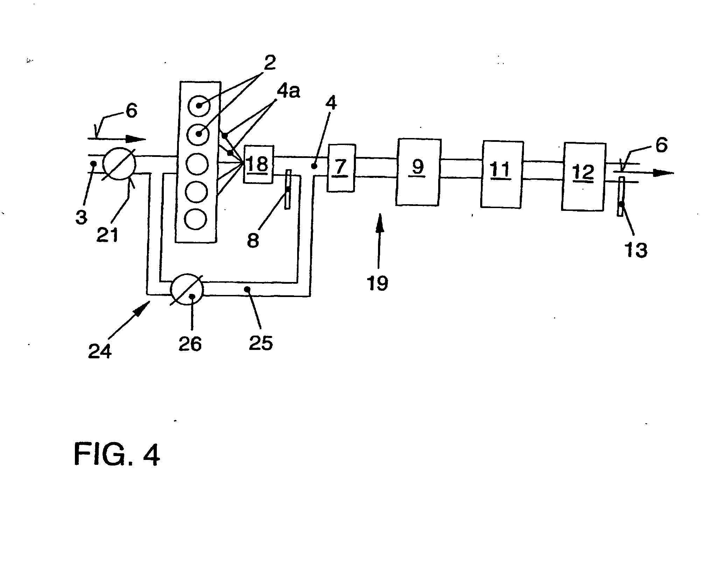

Der Einsatz des NOx-Speicherkatalysators 12 ist optional. Es ist möglich, den NOₓ-Speicherkatalysator 12 wegfallen zu lassen und eine an sich bekannte Abgasrückführvorrichtung 24 vorzusehen, die eine die Brennkraftmaschine 1 umgehende Rückführleitung 25 aufweist, die von der Abgasleitung 4, z.B. direkt hinter dem Abgasturbolader 18, abzweigt und in der Strömungsrichtung 6 vor der Brennkraftmaschine 1 mit der Luftansaugleitung 3 verbunden ist und zwar in der Strömungsrichtung 6 hinter der Drosselklappe 21 in der Luftansaugleitung 3, so daß die Verbrennungsluft im Funktionsbetrieb zunächst zur Drosselklappe 21 und dann zu der Mündung der Rückführleitung 25 und zu den Zylindern 2 gelangt. In der Rückführleitung 25 ist ein verstellbares Abgas-Rückführventil 26 angeordnet, mit dem die Menge des rückführbaren Abgases einstellbar ist, was durch die Steuereinrichtung erfolgt. Eine solche abgewandelte Abgasanlage und Brennkraftmaschine 1 ist in der Fig. 4 dargestellt, in der gleiche oder vergleichbare Teile mit gleichen Bezugszeichen versehen sind. Wenn die NOₓ-Emissionen durch eine Erhöhung der AbgasRückführrate bis auf einen gewünschten Wert reduziert werden können, kann der NOₓ-Speicherkatalysator 12 wegfallen, wie es Fig. 4 zeigt. Erhöhte Partikelemissionen werden durch den Partikelfilter 11 aufgefangen.

### BEZUGSZEICHENLISTE

- 1: Brennkraftmaschine
- 2: Zylinder
- 3: Luftansaugleitung
- 4: Abgasleitung
- 4a: Zweigleitungsabschnitte
- 5: Kraftstoff-Einspritzvorrichtung
- 6: Strömungsrichtung
- 7: Schwefelfalle
- 8: Lambda-Sonde
- 9: Oxidationskatalysator
- 11: Partikelfilter
- 12: NOₓ-Speicherkatalysator
- 13: NOₓ-Sensor
- 14: Gehäuse
- 15: Gehäuse
- 16: Gehäuse
- 17: Gehäuse
- 18: Abgasturbolader
- 19: Abgasanlage
- 21: Drosselklappe
- 22: 3-Wege-Katalysator
- 23: Gehäuse
- 24: Abgasrückführvorrichtung
- 25: Rückführleitung
- 26: Abgasrückführventil

## Patentansprüche

1. Vorrichtung zum Reduzieren von schädlichen Bestandteilen im Abgas einer Brennkraftmaschine (1), insbesondere einer Diesel-Brennkraftmaschine, mit einer Abgasleitung (4), in der in der Strömungsrichtung (6) hintereinander ein Oxidationskatalysator (9), ein Partikelfilter (11) zum Filtern von im Abgas enthaltenen Partikeln und ein N0ₓ-Speicherkatalysator (12) angeordnet sind, **dadurch gekennzeichnet, daß** die Vorrichtung einen Reduktionskatalysator (22) aufweist, der in Strömungsrichtung (6) hinter dem NOₓ-Speicherkatalysator (12) angeordnet ist, wobei in Strömungsrichtung vor dem Oxidationskatalysator (9) eine Lambda-Sonde angeordnet ist.

2. Vorrichtung nach Anspruch 1, **dadurch gekennzeichnet, dass** der NOₓ-Speicherkatalysator (12) und der Reduktionskatalysator (22) in einer Kombination angeordnet sind.

3. Vorrichtung nach Anspruch 1 oder 2, **dadurch gekennzeichnet, daß** der NOₓ-Speicherkatalysator (12) und der Reduktionskatalysator (22) durch eine mehrfache Beschichtung gebildet sind.

4. Vorrichtung nach einem der Ansprüche 1 bis 3, **dadurch gekennzeichnet, daß** der Reduktionskatalysator (22) durch einen 3-Wege-Katalysator gebildet ist.

5. Vorrichtung nach einem der vorangegangenen Ansprüche, **dadurch gekennzeichnet, daß** der Partikelfilter (11) und der NOₓ-Speicherkatalysator (12) in einer Kombination angeordnet sind.

6. Vorrichtung nach Anspruch 5, **dadurch gekennzeichnet, daß** derReduktionskatalysator (22) in der Kombination aus Partikelfilter (11) und NOₓ-Speicherkatalysator (12) angeordnet ist.

7. Vorrichtung nach Anspruch 6, **dadurch gekennzeichnet, daß** der NOₓ-Speicherkatalysator (12) und der Reduktionskatalysator (22) durch eine einfache oder mehrfache Beschichtung des Partikelfilter (11) gebildet ist bzw. sind.

8. Vorrichtung nach einem der vorherigen Ansprüche, **dadurch gekennzeichnet, daß** in der Abgasleitung (4) in der Strömungsrichtung (6) vor dem Oxidationskatalysator (9) eine Schwefelfalle (7) angeordnet ist.

9. Vorrichtung nach Anspruch 8, **dadurch gekennzeichnet, daß** die Lambda-Sonde (8) in der Strömungsrichtung (6) vor der Schwefelfalle (7) angeordnet ist.

10. Vorrichtung nach einem der Ansprüche 8 oder 9, **dadurch gekennzeichnet, daß** die Schwefelfalle (7) und der NOₓ-Speicherkatalysator (12) gleiche Regenerationsbedingungen aufweisen.

11. Vorrichtung nach einem der vorangegangenen Ansprüche, **dadurch gekennzeichnet, daß** ein NOₓ-Sensor (13) hinter dem NOₓ-Speicherkatalysator (12) angeordnet ist.

## Claims

1. Apparatus for reducing harmful constituents in the exhaust gas from an internal combustion engine (1), in particular a diesel internal combustion engine, having an exhaust pipe (4), in which an oxidation catalytic converter (9), a particulate filter (11) for filtering particulates contained in the exhaust gas and an NOₓ storage catalytic converter (12) are arranged in series as seen in the direction of flow (6), **characterized in that** the apparatus has a reduction catalytic converter (22), which is arranged downstream of the NOₓ storage catalytic converter (12), as seen in the direction of flow (6), a lambda sensor being arranged upstream of the oxidation catalytic converter (9), as seen in the direction of flow.

2. Apparatus according to Claim 1, **characterized in that** the NOₓ storage catalytic converter (12) and the reduction catalytic converter (22) are arranged in combination.

3. Apparatus according to Claim 1 or 2, **characterized in that** the NOₓ storage catalytic converter (12) and the reduction catalytic converter (22) are formed by a multiple coating.

4. Apparatus according to one of Claims 1 to 3, **characterized in that** the reduction catalytic converter (22) is formed by a three-way catalytic converter.

5. Apparatus according to one of the preceding claims, **characterized in that** the particulate filter (11) and the NOₓ storage catalytic converter (12) are arranged in combination.

6. Apparatus according to Claim 5, **characterized in that** the reduction catalytic converter (22) is arranged in the combination of particulate filter (11) and NOₓ storage catalytic converter (12).

7. Apparatus according to Claim 6, **characterized in that** the NOₓ storage catalytic converter (12) and the reduction catalytic converter (22) is/are formed by a single or multiple coating of the particulate filter (11).

8. Apparatus according to one of the preceding claims, **characterized in that** a sulphur trap (7) is arranged in the exhaust pipe (4), upstream of the oxidation catalytic converter (9), as seen in the direction of flow (6).

9. Apparatus according to Claim 8, **characterized in that** the lambda sensor (8) is arranged upstream of the sulphur trap (7), as seen in the direction of flow (6).

10. Apparatus according to either of Claims 8 or 9, **characterized in that** the sulphur trap (7) and the NOₓ storage catalytic converter (12) have the same regeneration conditions.

11. Apparatus according to one of the preceding claims, **characterized in that** an NOₓ sensor (13) is arranged downstream of the NOₓ storage catalytic converter (12).

## Revendications

1. Dispositif pour la réduction de constituants nocifs dans les gaz d'échappement d'un moteur à combustion interne (1), en particulier d'un moteur à combustion interne fonctionnant au diesel, présentant une conduite de gaz d'échappement (4), dans laquelle sont disposés, l'un derrière l'autre dans le sens du flux (6), un catalyseur d'oxydation (9), un filtre à particules (11) pour filtrer les particules contenues dans les gaz d'échappement et un catalyseur d'accumulation de NOₓ (12), **caractérisé en ce que** le dispositif présente un catalyseur de réduction (22), qui est disposé, dans le sens du flux (6), en aval du catalyseur d'accumulation de NOₓ (12), une sonde lambda étant disposée, dans le sens du flux, en amont du catalyseur d'oxydation (9).

2. Dispositif selon la revendication 1, **caractérisé en ce que** le catalyseur d'accumulation de NOₓ (12) et le catalyseur de réduction (22) sont disposés dans une combinaison.

3. Dispositif selon la revendication 1 ou 2, **caractérisé en ce que** le catalyseur d'accumulation de NOₓ (12) et le catalyseur de réduction (22) sont formés par un revêtement multiple.

4. Dispositif selon l'une quelconque des revendications 1 à 3, **caractérisé en ce que** le catalyseur de réduction (22) est formé par un catalyseur à trois voies.

5. Dispositif selon l'une quelconque des revendications précédentes, **caractérisé en ce que** le filtre à particules (11) et le catalyseur d'accumulation de NOₓ (12) sont disposés dans une combinaison.

6. Dispositif selon la revendication 5, **caractérisé en ce que** le catalyseur de réduction (22) est disposé dans la combinaison du filtre à particules (11) et du catalyseur d'accumulation de NOₓ (12).

7. Dispositif selon la revendication 6, **caractérisé en ce que** le catalyseur d'accumulation de NOₓ (12) et le catalyseur de réduction (22) sont formés par un revêtement simple ou multiple du filtre à particules (11).

8. Dispositif selon l'une quelconque des revendications précédentes, **caractérisé en ce qu'**un piège à soufre (7) est disposé dans la conduite de gaz d'échappement (4), dans le sens du flux (6), en amont du catalyseur d'oxydation (9).

9. Dispositif selon la revendication 8, **caractérisé en ce que** la sonde lambda (8) est disposée, dans le sens du flux (6), en amont du piège à soufre (7).

10. Dispositif selon la revendication 8 ou 9, **caractérisé en ce que** le piège à soufre (7) et le catalyseur d'accumulation de NOₓ (12) présentent les mêmes conditions de régénération.

11. Dispositif selon l'une quelconque des revendications précédentes, **caractérisé en ce qu'**un détecteur de NOₓ (13) est disposé en aval du catalyseur d'accumulation de NOₓ (12).
